# EUROPEAN PATENT APPLICATION

(11) **EP 4 250 538 A1**
(43) Date of publication of application: **27.09.2023**
(21) Application number: 23163933.7
(22) Date of filing: 24.03.2023
(51) Int. Cl.: H02K 1/28, H02K 1/30, H02K 1/276

(54) **ROTOR, ELECTRIC MOTOR, VEHICLE, AND ASSEMBLY METHOD FOR ROTOR**

(30) Priority: 25.03.2022 CN 202210305649
(71) Applicant: Valeo Automotive ePowertrain Systems (Shanghai) Co., Ltd., Shanghai 201108 (CN)
(72) Inventor: YING, Renlong, Shanghai S50SHG1 (CN); DUAN, Peng, Shanghai S50SHG1 (CN); XIA, Bing Bing, Shanghai S50SHG1 (CN); HUO, Xing, Shanghai S50SHG1 (CN); XIE, Xi, Shanghai S50SHG1 (CN); ZHU, Wei, Shanghai S50SHG1 (CN); LIAO, Binhong, Shanghai S50SHG1 (CN); LIU, Jinjin, Shanghai S50SHG1 (CN)
(74) Representative: Valeo Powertrain Systems

(57) **Abstract**

The present disclosure relates to a rotor of an electric motor, comprising: a main body, extending along a rotation axis X of an electric motor, the main body being formed of a set of stacked sheets and provided with a fastener through-hole; and a fastener, extending through the fastener through-hole in the main body, to clamp the set of stacked sheets. The fastener through-hole has a recess at a radially outer part of an inner wall thereof, the fastener abuts against the recess and is at least partially accommodated in the recess. The present disclosure further relates to an electric motor comprising the rotor, and a vehicle comprising the electric motor. The present disclosure further relates to a method for assembling an rotor.

## Description

### TECHNICAL FIELD

The present disclosure relates to the field of electric motors, in particular to an electric motor rotor, an electric motor comprising the electric motor rotor, and a motor vehicle comprising the electric motor. The present disclosure further relates to an assembly method for an electric motor rotor.

### BACKGROUND OF THE INVENTION

Electric motor noise, vibration and noise harshness are major issues affecting electric motor performance in the field of electric motors at present, being widespread in existing electric motor products.

Existing electric motor rotors are generally formed of lamination sets, in which laminations are stacked tightly to ensure the rigidity and strength of the electric motor component. In general, once stacked, the laminations form a body, then magnets are installed in slots in the body, and the slots in the body are filled with glue. Once the glue has hardened, fastening screws will be passed through through-holes in the body, to press the laminations firmly together. However, it has been found that such a structure and assembly method still have some issues, which prevent the abovementioned issues of noise, vibration and noise harshness from being solved completely, thus affecting electric motor performance. When an electric motor is running, the rotor can reach very high rotation speeds, e.g. more than 10,000 rpm, and this will subject the fastening screws to a very large centrifugal force. For example, a single fastening screw weighing a few hundred grams will be subjected to a centrifugal force of several hundred kilograms. Under the action of centrifugal force, the fastening screw will be supported on a wall of the through-hole in the body. However, the diameter of the through-hole is generally larger than the diameter of the fastening screw, to facilitate insertion of the fastening screw, but a larger diameter of this kind will result in the area of contact between the fastening screw and the through-hole being too small, so that the fastening screw cannot be reliably supported. Thus, when the electric motor rotates at high speed, a huge centrifugal force will damage the fastening screw; consequently, it will be unable to continue to maintain the compression force that keeps the laminations fixed tightly together, and the gaps between the laminations will increase in size, resulting in more obvious vibration and noise.

Thus, there is a need for an electric motor rotor in which fastening screws can be inserted conveniently and which reliably supports the fastening screws during high-speed rotation, and a method for assembling same.

### SUMMARY OF THE INVENTION

The objective of the present disclosure is to propose a rotor of an electric motor in which fastening screws can be inserted conveniently and which reliably supports the fastening screws during high-speed rotation, to solve the technical problem mentioned above, thereby mitigating the issues of noise, vibration and noise harshness in electric motors, and thus improving electric motor performance.

The rotor according to the present disclosure comprises: a main body, extending along a rotation axis of an electric motor, the main body being formed of a set of stacked sheets and provided with a fastener through-hole; a fastener, extending through the fastener through-hole in the main body, to clamp the set of stacked sheets; wherein the fastener through-hole has a recess at a radially outer part of an inner wall thereof, the fastener abuts against the recess and is at least partially accommodated in the recess.

In the present disclosure, when the rotor is being assembled, the fastener can be conveniently inserted into the main body through the fastener through-hole; and during high-speed rotation of the rotor, the fastener abuts against the recess of the fastener through-hole, thus being supported by the recess. Thus, the fastener can be conveniently inserted into the rotor according to the present disclosure, which can also reliably support the fastener during high-speed rotation, thereby avoiding damage to the fastener from a huge centrifugal force during high-speed rotation. The stacked sheets of the main body can be held in a tightly stacked state by the compression force applied by the fastener, and the gaps between the stacked sheets in the main body part will not increase in size, so the structural strength and rigidity of the rotor are effectively enhanced, and the problem of reduced compression force due to fastener damage in the prior art is effectively avoided, thus further improving the performance characteristics of the electric motor as a whole.

The rotor according to the present disclosure may also have one or more of the following features, separately or in combination.

According to one embodiment of the present disclosure, the fastener is a bolt, the fastener through-hole is a round hole corresponding to the bolt, and the recess is an arc segment, the diameter of the arc segment being smaller than the diameter of the round hole. Through this structure, the fastener through-hole and the recess can be formed in a simpler manner.

According to one embodiment of the present disclosure, the arc length of the arc segment is less than 50% of the circumference of the fastener. Preferably, the arc length of the arc segment is equal to 40% of the circumference of the fastener. This arc length setting of the arc segment not only enables the fastener to enter and abut the arc segment easily, but also enables the arc segment to provide the fastener with sufficient constraint and support.

According to one embodiment of the present disclosure, the part of the bolt that is located in the fastener through-hole has no thread. That is to say, the thread of the bolt is located outside the main body. Thus, the part of the bolt that is located in the fastener through-hole has a smooth surface and a uniform diameter, enabling the main body to support the fastener along the entire axial length of the main body.

According to one embodiment of the present disclosure, the fastener further comprises a washer, for pushing the fastener to abut the recess.

According to one embodiment of the present disclosure, the electric motor rotor further comprises end plates disposed at two ends of the main body, the end plates being provided with fastener guide slots for guiding the fastener to the recess.

According to one embodiment of the present disclosure, the direction of extension of the fastener guide slot has components in both a tangential direction and a radial direction of the end plate. That is to say, the direction of extension of the fastener guide slot is neither parallel nor perpendicular to the radial direction of the end plate.

According to one embodiment of the present disclosure, the circle centre of the round hole and the circle centre of the arc segment lie on the same diameter of the rotor. That is to say, a line connecting the circle centre of the round hole and the circle centre of the arc segment extends in a radial direction of the electric motor rotor.

The present disclosure further relates to an electric motor comprising the rotor described above.

The present disclosure further relates to a vehicle comprising the abovementioned electric motor.

The present disclosure further relates to an assembly method for a rotor of an electric motor, the method comprising: providing a main body, the main body extending along a rotation axis of an electric motor and being formed of a set of stacked sheets, and the main body being provided with a fastener through-hole, the fastener through-hole having a recess at a radially outer part of an inner wall thereof; inserting a fastener into the fastener through-hole and passing it through the fastener through-hole; and pushing the fastener radially outwards, so that it enters and abuts against the recess.

According to one embodiment of the present disclosure, the fastener comprises a washer, and the step of pushing the fastener radially outwards in the assembly method comprises pushing the washer radially outwards.

According to one embodiment of the present disclosure, the assembly method further comprises providing end plates at two ends of the main body before inserting the fastener into the fastener through-hole and passing it through the fastener through-hole, the end plates comprising fastener guide slots, and the step of pushing the fastener radially outwards comprises rotating the end plates, such that the fastener guide slots guide the fastener to the recess.

### BRIEF DESCRIPTION OF THE DRAWINGS

To explain the technical solution of embodiments of the present disclosure more clearly, the drawings which need to be used in describing the embodiments are described in simple terms below. Obviously, the drawings in the description below are merely some embodiments of the present disclosure, and those skilled in the art could obtain other drawings based on these drawings without expending inventive effort. The drawings below have not been drawn by meticulously reducing or enlarging actual dimensions in equal proportion, but focus on showing the substance of the present disclosure.
Fig. 1 shows a schematic drawing of a rotor of an electric motor according to the present disclosure, viewed from one side in the direction of a rotation axis.
Fig. 2 shows a sectional view of part of the rotor according to the present disclosure, showing fastener through-holes having recesses.
Figs 3A - 3B show schematic drawings of fasteners being pushed into recesses by means of washers.
Fig. 4 shows a front view of an end plate of the rotor according to the present disclosure, the end plate having fastener guide slots.

In all of the drawings, identical or similar components are indicated with identical numerals.

### DETAILED DESCRIPTION OF THE INVENTION

In order to clarify the objective, technical solution and advantages of embodiments of the present disclosure, the technical solution of embodiments of the present disclosure is described clearly and completely below in conjunction with the drawings accompanying embodiments of the present disclosure.

Unless otherwise defined, technical terms or scientific terms used herein shall have the common meanings understood by those of ordinary skill in the art to which this disclosure belongs. "One", "a" or "said" and similar words used in the description and claims of the patent application of the present disclosure do not indicate a quantity limit, but mean that there is at least one. "Comprises" or "includes" and similar words mean that the element or object appearing before the word encompasses the elements or objects and their equivalents listed after the word, without excluding other elements or objects. The axial direction means the direction along a rotation axis X of the rotor of the electric motor, and a radial direction means a direction perpendicular to the rotation axis X.

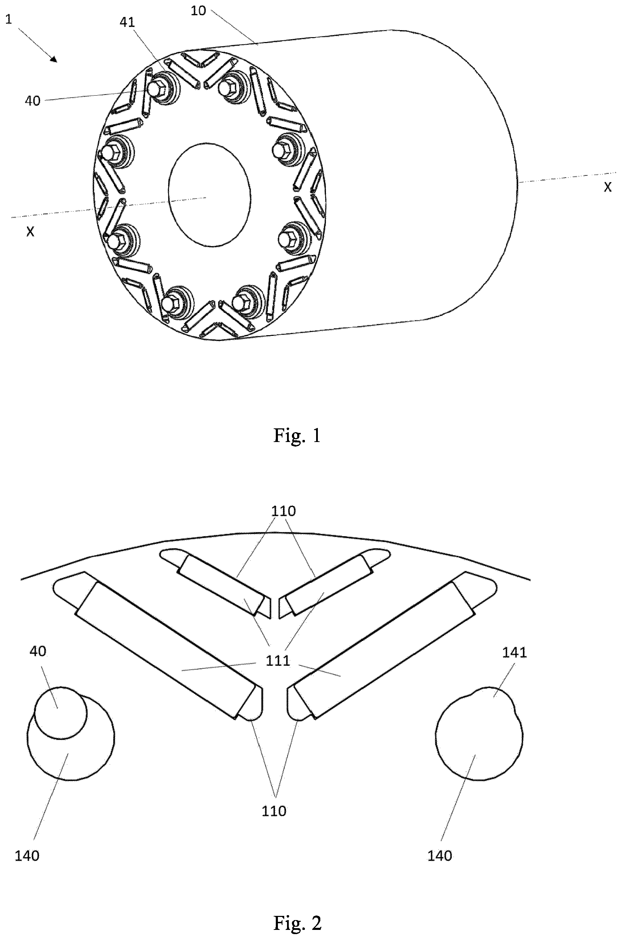

Fig. 1 shows a schematic drawing of a rotor of an electric motor 1 according to the present disclosure, viewed from one side in the direction of the rotation axis X. The rotor 1 may be mounted in an electric motor housing of a vehicle (not shown in the figure), wherein the electric motor is for example a permanent magnet electric motor. The vehicle may be an electric vehicle or a hybrid vehicle.

In an operating state, the rotor 1 rotates at high speed about the rotation axis X of the electric motor; the rotation speed thereof may reach more than 10,000 rpm. To better explain the technical solution according to the present disclosure, an electric motor shaft is not shown in the drawings of the present disclosure; the electric motor shaft extends through the centre of the rotor 1 along the rotation axis X.

As shown in Fig. 1, the rotor 1 may comprise a main body 10. The external shape of the main body 10 is cylindrical overall; the main body extends along the rotation axis X of the electric motor, and rotates about the rotation axis X during operation. The main body 10 is formed of a set of stacked sheets. These stacked sheets are stacked tightly together with a sufficient compression force to ensure the rigidity and strength of the rotor. To ensure that the stacked sheets can be held tightly during high-speed rotation of the electric motor, the rotor 1 further comprises a fastener 40, the main body being pressed together by the fastener 40. The rotor 1 may comprise multiple fasteners 40, which may have an elongated shape. In an example of the present disclosure, the fastener 40 may be a bolt.

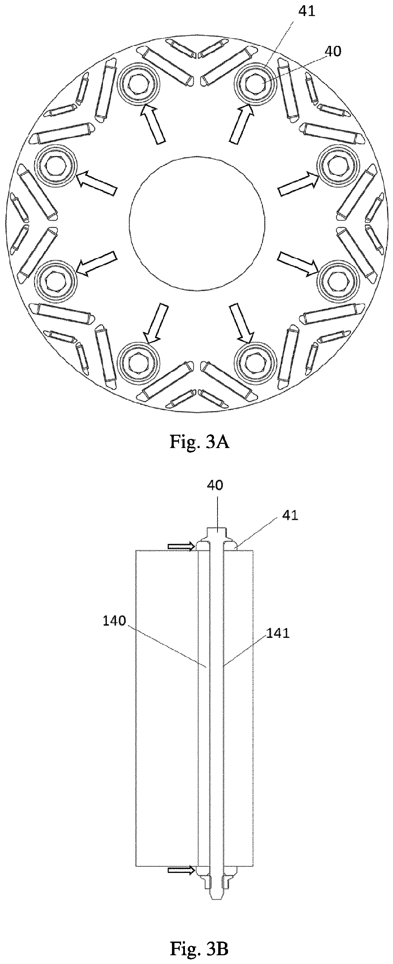

The main body 10 comprises a fastener through-hole 140, which may be a through-hole extending through the main body 10 from one end of the main body 10 to the other end thereof in the direction of the rotation axis X, forming a hollow space for the fastener to pass through. The main body 10 may comprise multiple fastener through-holes 140; in the example shown in Fig. 1, it comprises a total of 8 fastener through-holes 140, distributed in the main body 10 uniformly about the rotation axis X, and there are correspondingly 8 fasteners. In the process of assembly, the fastener 40 passes through the corresponding fastener through-hole 140 of the main body 10 at one side and passes out from the other side, and is fixed, for example by means of a nut. The fastener 40 may further comprise a washer 41 in contact with the main body 10. Although Fig. 1 shows only one side of the main body 10, it may be envisaged that the other side of the main body 10 also has a washer 41. The washers 41 clamp the stacked sheets of the main body 10 from the two sides. The washers 41 can spread the compression force applied by the fastener 40 over its entire surface area and, as will be described in detail below with reference to Figs. 3A and 3B, are used to push the fastener.

Referring to Fig. 2, this shows a sectional view of part of the electric motor rotor, including two fastener through-holes 140, one having a fastener 40 passing through it, and the other having the fastener 40 omitted to show the structure of the fastener through-hole 140 more clearly. In the example shown in Fig. 2, the fastener through-hole 140 is a round hole; as can be envisaged, the fastener through-hole 140 may have other shapes, such as a square hole, rectangular hole, obround hole, etc. A dimension (in the example of Fig. 2, the diameter) of the fastener through-hole 140 is larger than a dimension of the fastener 40, so that the fastener 40 can pass through the fastener through-hole 140 conveniently. However, such a mismatch in dimension will result in the area of contact between the fastener and the through-hole in a radial direction being too small, making it impossible to withstand a centrifugal force in the radial direction to firmly support the fastener 40.

In these circumstances, a recess 141 is provided in the fastener through-hole 140, at a radially outer part of an inner wall thereof, in order to support the fastener 40 more effectively. In the example shown in Fig. 2, the recess 141 takes the form of an arc segment, the diameter of which is smaller than the diameter of the fastener through-hole 140 and matched to the diameter of the fastener 40. The fastener 40 abuts against the recess 141 and is partially accommodated in the recess 141. The arc length of the arc segment is less than 50% of the circumference of the fastener 40, and is preferably about 40% of the circumference of the fastener 40. The periphery of the fastener 40 can fully contact the arc segment, thereby increasing the area of contact between the recess 141 and the fastener 40, so that the fastener 40 can be supported reliably. In addition, the circle centre of the round hole of the fastener through-hole 140 and the circle centre of the arc segment of the recess 141 lie on the same diameter of the rotor 1, i.e. a line connecting the two circle centres intersects the rotation axis X. This can ensure that the recess 141 supports the fastener 40 firmly in the radial direction, and makes it easy to move the fastener 40 into the recess 141 from the fastener through-hole 140.

To ensure as large an area of contact as possible, the part of the fastener 40 that is inside the fastener through-hole 140 has no thread, i.e. the thread of the fastener 40 is located outside the main body 10. The part of the fastener 40 that is inside the fastener through-hole 140 has a smooth surface and a uniform diameter. In the situation shown in Figs. 1 and 2 where the fastener 40 is a bolt, it has a bolt head at one end of the main body 10 and a thread at the other end of the main body, and is fixed by means of a nut. As can be envisaged, the fastener 40 could also have threads at both ends of the main body 10, both threads being fixed by means of nuts.

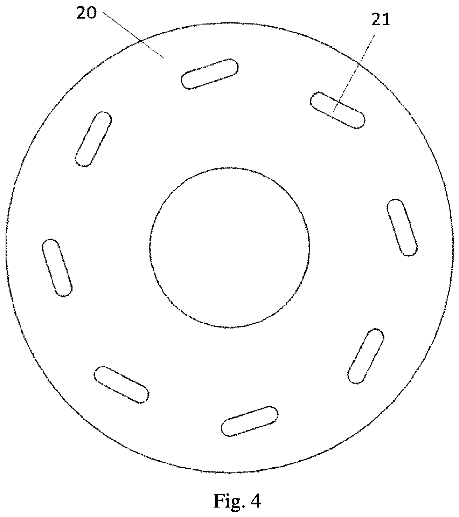

Although not shown in the assembled drawing of Fig. 1, the rotor 1 may further comprise end plates 20 disposed at two ends of the main body 10, with the stacked sheets of the main body 10 being clamped between the two end plates 20. Referring to Fig. 4, the end plate 20 has a disc shape, corresponding to the round shape of the main body 10 in a radial plane. A fastener guide slot 21 is provided in the end plate 20. The fastener guide slot 21 of the end plate 20 at one end of the main body 10 and the fastener guide slot 21 of the end plate 20 at the other end of the main body 10 are in communication with the fastener through-hole 140 of the main body 10 in the direction of the rotation axis X, forming a hollow space for the fastener to pass through. In the process of assembly, the fastener 40 first passes through the fastener guide slot 21 in the end plate 20 at one end of the main body 10, then enters the fastener through-hole 140 in the main body 10, passes out through the fastener guide slot 21 in the end plate 20 at the other end of the main body 10, and is fixed. For example, when the fastener is a bolt, a nut may be fixed to the other end of the bolt to fix it. In this way, the main body 10 and the end plates 20 at the two ends thereof are firmly fitted together, and the two end plates 20 clamp the stacked sheets between them with sufficient compression force. In this case, the fastener 40 may not include a washer.

The fastener guide slot 21 is used to guide the fastener 40 into the recess 141 from the fastener through-hole 140. In particular, the direction of extension of the fastener guide slot 21 has components in both a tangential direction and a radial direction of the end plate 20, so that as the fastener 40 moves in the fastener guide slot 21, it can move from the fastener through-hole 140 to the recess 141 in the radial direction. In the example of Fig. 4, the fastener guide slot 21 takes the form of an obround hole, a length direction of the obround hole forming an angle with the radial direction of the end plate 20; the angle is between 0° and 90°, not including 0° or 90°. As can be envisaged, the fastener guide slot 21 could also have another shape capable of guiding movement of the fastener 40 from the fastener through-hole 140 to the recess 141. This guidance may be accomplished by rotating the end plate 20; as the end plate 20 rotates through a certain angle, the fastener guide slot 21 pushes the fastener 40 from the fastener through-hole 140 to the recess 141, to abut the recess 141.

In the present disclosure, when the rotor is being assembled, the fastener can be conveniently inserted into the main body through the fastener through-hole, and then pushed to abut the recess of the fastener through-hole. The fastener is supported by the recess during high-speed rotation of the rotor. Thus, the fastener can be conveniently inserted into the rotor according to the present disclosure, which can also reliably support the fastener during high-speed rotation, thereby avoiding damage to the fastener from a huge centrifugal force during high-speed rotation. The stacked sheets of the main body can be held in a tightly stacked state by the compression force applied by the fastener, and the gaps between the stacked sheets in the main body part will not increase in size, so the structural strength and rigidity of the rotor are effectively enhanced, and the problem of reduced compression force due to fastener damage in the prior art is effectively avoided, thus further improving the performance characteristics of the electric motor as a whole.

The main body 10 is further provided with a magnet installation slot 110 for installing a magnet 111. The magnet installation slot 110 extends from one end of the main body 10 to the other end, and may be a through-hole extending through the main body 10 along the rotation axis X. The magnet 111 is installed in the magnet installation slot 110. In the example shown in Figs. 1 and 2, the main body 10 comprises two types of magnet installation slots 110 of different sizes, for installing two types of magnets 111 of different sizes. The magnet installation slots 110 may be arranged in sets, each set comprising 4 magnet installation slots 110 arranged in two inverted V-shapes. The fastener through-hole 140 is arranged between two adjacent sets. Multiple sets of magnet installation slots may also be distributed in the main body 10 uniformly about the rotation axis X.

An assembly method for the rotor 1 according to the present disclosure is described below, the assembly method comprising the following steps:
Step 1: a main body 10 is provided. As stated above, the main body 10 extends along a rotation axis X of an electric motor and is formed of a set of stacked sheets, and the main body 10 is provided with a fastener through-hole 140, the fastener through-hole 140 having a recess 141 at a radially outer part of an inner wall thereof.
Step 2: a fastener 40 is inserted into the fastener through-hole 140 and passed through the fastener through-hole.
Step 3: the fastener 40 is pushed radially outwards, so that it enters and abuts against the recess 141.

In the case of a fastener 40 comprising a washer 41, step 3 of pushing the fastener 40 radially outwards comprises pushing the washer 41 radially outwards. Referring to Figs. 3A and 3B, the arrows pointing radially outwards represent the pushing of the washers 41, and the washers 41 then push the fasteners 40 to enter and abut the recesses 141. As shown in Fig. 3A, multiple washers 41 may be pushed outwards simultaneously; Fig. 3B specifically shows a schematic drawing in which one of the washers 41 has pushed the fastener 40 to enter and abut the recess 141. As can be envisaged, the washers 41 may also be pushed outwards one by one. Such pushing may be accomplished in a manner known to those skilled in the art.

In the case of an rotor comprising end plates 20, the assembly method further comprises providing end plates 20; the two end plates 20 are disposed at two ends of the main body 10 respectively in the direction of the rotation axis X, in order to clamp the set of stacked sheets between the end plates 20, and the end plates 20 comprise fastener guide slots 21. The step of installing the fastener may be performed after step 1 and before step 2. In this case, step 3 of pushing the fastener 40 radially outwards comprises rotating the end plates 20, such that the fastener guide slot 21 guides the fastener 40 to the recess 141.

According to another aspect of the present disclosure, an electric motor is proposed, comprising the rotor described above. It can realize the functions of the rotor described above, and has the advantages described above.

According to another aspect of the present disclosure, a motor vehicle is proposed, comprising the electric motor mentioned above.

The motor vehicle may be a plug-in hybrid electric vehicle, a battery electric vehicle, or another type of motor vehicle. Based on the above, the motor vehicle can realize the functions of the electric motor component and electric motor described above, and has the advantages described above.

Certain features, structures or characteristics in one or more embodiments of the present disclosure may be combined appropriately.

The above is a description of the present disclosure, and should not be regarded as limiting it. Although some exemplary embodiments of the present disclosure have been described, those skilled in the art will readily understand that many modifications could be made to the exemplary embodiments without departing from the original teaching and advantages of the present disclosure. Therefore, all such modifications are intended to be included in the scope of the present disclosure as defined by the claims. It should be understood that the above is a description of the present disclosure, and the present disclosure should not be regarded as being limited to the specific embodiments disclosed; moreover, modifications to the disclosed embodiments and other embodiments are intended to be included in the scope of the present disclosure.

## Claims

1. A rotor of an electric motor (1), comprising:
a main body (10), extending along a rotation axis (X) of an electric motor, the main body (10) being formed of a set of stacked sheets and provided with a fastener through-hole (140);
a fastener (40), extending through the fastener through-hole (140) in the main body, to clamp the set of stacked sheets;
wherein the fastener through-hole (140) has a recess (141) at a radially outer part of an inner wall thereof, the fastener (40) abuts against the recess (141) and is at least partially accommodated in the recess (141).

2. The rotor (1) according to Claim 1, wherein the fastener (40) is a bolt, the fastener through-hole (140) is a round hole corresponding to the bolt, and the recess (141) is an arc segment, the diameter of the arc segment is smaller than the diameter of the round hole.

3. The rotor (1) according to Claim 2, wherein the arc length of the arc segment is less than 50% of the circumference of the fastener (40).

4. The rotor (1) according to Claim 2 or 3, wherein the arc length of the arc segment is equal to 40% of the circumference of the fastener (40).

5. The rotor (1) according to Claim 2 or 3, wherein the part of the bolt that is located in the fastener through-hole (140) has no thread.

6. The rotor (1) according to any one of Claims 1-3, wherein the fastener (40) further comprises a washer (41), for pushing the fastener (40) to against the recess (141).

7. The rotor (1) according to any one of Claims 1-3, wherein the rotor (1) further comprises end plates (20) disposed at two ends of the main body (10), the end plates (20) are provided with fastener guide slots (21) for guiding the fastener (40) to the recess (141).

8. The rotor (1) according to Claim 7, wherein the direction of extension of the fastener guide slot (21) has components in both a radial direction and a tangential direction of the end plate.

9. The rotor (1) according to Claim 2 or 3, wherein the circle centre of the round hole and the circle centre of the arc segment lie on the same diameter of the rotor (1).

10. An electric motor, comprising the rotor (1) according to any one of Claims 1 to 9.

11. A vehicle, comprising the electric motor according to Claim 10.

12. An assembly method for assembling a rotor of an electric motor (1), comprising:
providing a main body (10), the main body (10) extending along a rotation axis (X) of an electric motor and being formed of a set of stacked sheets, and the main body (10) being provided with a fastener through-hole (140), the fastener through-hole (140) having a recess (141) at a radially outer part of an inner wall thereof;
inserting a fastener (40) into the fastener through-hole (140) and passing it through the fastener through-hole;
pushing the fastener (40) radially outwards, so that it enters and abuts against the recess (141).

13. The assembly method according to Claim 12, wherein the fastener (40) comprises a washer (41), and the step of pushing the fastener (40) radially outwards comprises pushing the washer (41) radially outwards.

14. The assembly method according to Claim 12, comprising providing end plates (20) at two ends of the main body (10) before inserting the fastener (40) into the fastener through-hole (140) and passing it through the fastener through-hole, the end plates (20) comprising fastener guide slots (21), wherein
the step of pushing the fastener (40) radially outwards comprises rotating the end plates (20), such that the fastener guide slots (21) guide the fastener (40) to the recess (141).
